# EUROPÄISCHE PATENTSCHRIFT

(11) **EP 1 990 159 B1**
(45) Veröffentlichungstag und Bekanntmachung des Hinweises auf die Patenterteilung: **02.12.2009**
(21) Anmeldenummer: 07009521.1
(22) Anmeldetag: 11.05.2007
(51) Int. Cl.: B27M 1/08, E04C 2/36

(54) **Verfahren zum Herstellen von Leichtbauplatten**
Method for manufacturing lightweight building boards
Procédé de fabrication d'accumulateurs de panneaux de construction légers

(43) Veröffentlichungstag der Anmeldung: 12.11.2008
(73) Patentinhaber: Homag Holzbearbeitungssysteme AG, 72296 Schopfloch (DE)
(72) Erfinder: Schmid, Johannes, 72181 Starzach/Wachendorf (DE); Gauß, Achim, 72280 Dornstetten/Hallwangen (DE)
(74) Vertreter: HOFFMANN EITLE

(56) Entgegenhaltungen:
- EP-A- 1 574 264
- WO-A1-2008/122616
- FR-A- 2 395 823
- US-A- 4 378 170

## Beschreibung

### Technisches Gebiet

Die Erfindung betrifft ein Verfahren zum Herstellen von Leichtbauplatten ausgehend von einem Werkstück, das zwei dünnwandige Decklagen und mindestens eine zwischen den Decklagen angeordnete Kernlage aus leichtem Füllmaterial aufweist, wobei die mindestens eine Kernlage Hohlräume besitzt und eine geringere mittlere Dichte aufweist als die Decklagen.

### Stand der Technik

Leichtbauplatten der hier zur Rede stehenden Art finden verbreitet Anwendung, beispielsweise zur Herstellung von Türen, zunehmend aber auch zur Herstellung von Tischplatten oder anderen Möbelteilen.

Ein Verfahren zum Herstellen bzw. Veredeln von Leichtbauplatten ist beispielsweise in der EP-A-1640128 offenbart. Bei diesem Verfahren wird zunächst eine Leichtbauplatte formatiert, d. h. aus einem Ausgangswerkstück herausgetrennt und in die gewünschte Rohform gebracht. Anschließend wird im Bereich der Schmalseite der Leichtbauplatte eine Ausnehmung eingefräst, und zwar sowohl in die Innenseite der Decklagen als auch in die Kernlage. Abschließend wird eine Stützkante in die Ausnehmung eingeleimt, die mit einer Dekorkante versehen ist oder noch versehen wird.

Sowohl die Stützkante als auch die Dekorkante bestehen häufig aus einem Kunststoffmaterial. Dabei hat sich gezeigt, dass die meist dicker ausgeführte Stützkante im Bereich von Ecken oder Krümmungen der Schmalfläche der Leichtbauplatte schwierig umgelenkt werden kann, so dass die herstellbaren Plattengeometrien begrenzt sind bzw. mit mehreren separaten Stützkantenabschnitten gearbeitet werden muss, was zu einem aufwändigen Verfahrensablauf führt.

Eine weitere Technik zum Vorsehen einer Stützkante ist in der DE 10 2004 010 873 A1 offenbart. Bei dieser wird ein fließfähiges und aushärtbares Material auf die Schmalfläche der Leichtbauplatte derart aufgebracht, dass dieses in Hohlräume der Kernlage eindringt. Zu diesem Zweck kommt ein horizontal angeordneter bzw. in der Werkstückebene liegender Extruder zum Einsatz, der meist große Abmessungen besitzt. Durch die großen Abmessungen des Extruders sind auch hier die herstellbaren Werkstückgeometrien begrenzt. Beispielsweise lassen sich Spülenausschnitte für Küchenarbeitsplatten, U-förmige Arbeitsplatten in deren Innenbereich, etc. nicht bearbeiten.

Ferner offenbart die FR-A-2 395 823 ein Verfahren nach dem Oberbegriff von Anspruch 1.

### Darstellung der Erfindung

Es ist Aufgabe der vorliegenden Erfindung, ein Verfahren zum Herstellen von Leichtbauplatten bereitzustellen, das bei einem einfachen Verfahrensablauf die Ausführung unterschiedlichster Plattengeometrien ermöglicht.

Diese Aufgabe wird erfindungsgemäß durch ein Verfahren zum Herstellen von Leichtbauplatten nach Anspruch 1 gelöst. Besonders vorteilhafte Weiterbildungen der Erfindung sind Gegenstand der abhängigen Ansprüche.

Der Erfindung liegt der Gedanke zugrunde, das Formatieren der Leichtbauplatte aus einem Werkstück und das Einbringen einer Stützkante im Bereich einer Schmalfläche nicht als sequentielle Verfahrensschritte zu betrachten, sondern zusammenzuführen und nutzbringend miteinander zu vereinen.

Vor diesem Hintergrund weist das erfindungsgemäße Verfahren folgende Verfahrensschritte auf:
- Einbringen mindestens einer Nut in das Werkstück, die sich durch mindestens eine erste Decklage sowie zumindest teilweise durch die mindestens eine Kernlage erstreckt und zumindest einen Abschnitt einer Kontur der herzustellenden Leichtbauplatte umschreibt,
- Einbringen einer aushärtbaren Masse in die mindestens eine Nut,
- zumindest teilweises Aushärten der aushärtbaren Masse, und
- Führen eines Trennschnitts entlang der mindestens einen Nut, so dass die zumindest teilweise ausgehärtete Masse in Nutlängsrichtung durchtrennt wird.

Auf diese Weise wird es möglich, ohne aufwändige Maßnahmen oder Qualitätseinbußen Leichtbauplatten mit praktisch jeder beliebigen Geometrie bzw. Kontur herzustellen. Dabei wirkt die mindestens eine Nut wie eine "Verschalung", die dafür sorgt, dass die aushärtbare Masse sicher in Hohlräume der Kernlage und ggf. Poren der Decklagen(n) eindringen und so die Leichtbauplatte im Randbereich stabilisieren und abdichten kann. Hierfür waren im oben genannten Stand der Technik gemäß DE 10 2004 010 873 A1 aufwändige Maßnahmen erforderlich, und die aushärtbare Masse musste hinsichtlich ihrer Konsistenz und Aushärtungsgeschwindigkeit enge Toleranzen erfüllen. Dies ist bei dem erfindungsgemäßen Verfahren nicht mehr der Fall.

Das erfindungsgemäße Verfahren kann darüber hinaus mit einfachen Mitteln ausgeführt werden, die im Gebiet der Holzbearbeitung in der Regel ohnehin verfügbar sind und kompakt angeordnet werden können.

Um dabei eine besonders gute Abdichtung und Steifigkeit der Randbereiche der Leichtbauplatte zu erzielen, ist es gemäß einer Weiterbildung der Erfindung vorgesehen, dass die mindestens eine Nut vollständig durch die mindestens eine Kernlage hindurch und bevorzugt zumindest teilweise in die zweite Decklage hineinreicht.

Die Querschnittsform der mindestens einen Nut ist im Rahmen der vorliegenden Erfindung nicht besonders beschränkt und kann vielfältig ausgestaltet sein. Im Hinblick auf eine leichte Herstellbarkeit hat es sich als vorteilhaft erwiesen, dass die mindestens eine Nut im Querschnitt im Wesentlichen u-förmig ist.

Prinzipiell kann jede Nut im Rahmen der vorliegenden Erfindung an nur eine einzige herzustellende Leichtbauplatte angrenzen. Um jedoch bei der Herstellung mehrerer Leichtbauplatten ausgehend von einem bestimmten Ausgangswerkstück den Verschnitt zu minimieren, ist gemäß einer Weiterbildung der Erfindung vorgesehen, dass die mindestens eine Nut innerhalb des Werkstücks an mindestens zwei herzustellende Leichtbauplatten angrenzt. So können die Nuten innerhalb eines Werkstücks beispielsweise nach Art eines Schachbrettmusters angeordnet werden, sodass jede Nut an zwei Werkstücke angrenzt. Es sind jedoch auch vielfältige andersartige Ausgestaltungen und Anordnungen denkbar, um aus einem bestimmten Werkstück eine maximale Anzahl an Leichtbauplatten zu erhalten bzw. den Verschnitt zu minimieren.

Bei manchen Anwendungen kann es genügen, die jeweilige Nut nur teilweise mit der aushärtbaren Masse zu befüllen. Im Hinblick auf eine gute Abdichtungs- und Stabilisierungswirkung der aushärtbaren Masse hat es sich jedoch als vorteilhaft erwiesen, dass gemäß einer Weiterbildung der Erfindung die aushärtbare Masse derart in die mindestens eine Nut eingebracht wird, dass zumindest die angrenzende Kernlage vollständig durch die Masse bedeckt ist.

Der Trennschnitt kann prinzipiell an einer beliebigen Stelle vollständig oder teilweise innerhalb der Nut geführt werden. Gemäß einer Weiterbildung der Erfindung ist dabei vorgesehen, dass der Trennschnitt am Rand der Nut vollständig oder teilweise innerhalb der Nut geführt wird, sodass nach dem Trennschnitt nur noch ein geringer Nachbearbeitungsaufwand erforderlich ist, während gleichzeitig eine gute Abdichtungs- und Stabilisierungswirkung des Werkstücks erzielt wird.

Je nach Art der zum Einsatz kommenden aushärtbaren Masse kann eine nach dem oben beschriebenen Verfahren hergestellte Leichtbauplatte bereits ein Endprodukt darstellen. Alternativ ist gemäß einer Weiterbildung der Erfindung vorgesehen, dass die Oberfläche der zumindest teilweise ausgehärteten Masse nach dem Führen des Trennschnitts mindestens einem weiteren Verfahrensschritt unterworfen wird, der ausgewählt ist aus Bearbeiten, insbesondere spanendes Bearbeiten, Bemustern, Beschichten und Aufbringen einer Dekorkante. Hierdurch lässt sich eine besonders hochwertige und vielseitig gestaltbare Leichtbauplatte herstellen.

### Kurze Beschreibung der Zeichnungen

- Fig. 1: zeigt schematisch eine Draufsicht eines Werkstücks mit einer Nut zur Herstellung einer Leichtbauplatte als Ausführungsform der vorliegenden Erfindung;
- Fig. 2: zeigt schematisch eine teilweise Schnittansicht des in Fig. 1 gezeigten Werkstücks mit einem Bearbeitungswerkstück;
- Fig. 3: zeigt schematisch eine teilweise Schnittansicht des in Fig. 1 gezeigten Werkstücks in einem weiteren Verfahrensschritt;
- Fig. 4: zeigt schematisch eine teilweise Schnittansicht einer Leichtbauplatte als bevorzugte Ausführungsform der vorliegenden Erfindung.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

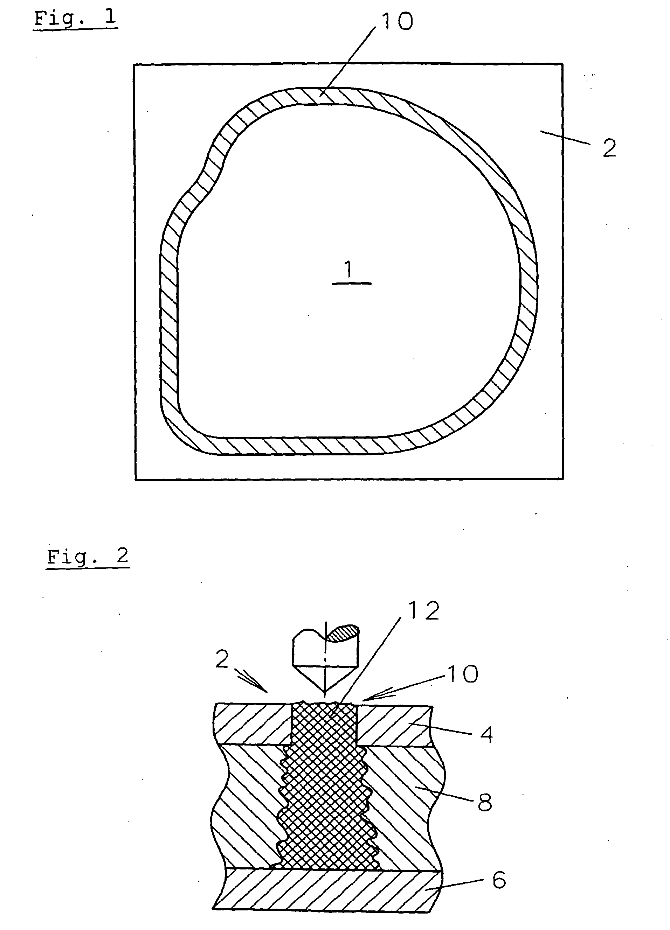

Die Erfindung bezieht sich auf die Herstellung von Leichtbauplatten ausgehend von einem Werkstück, das in Fig. 1 und Fig. 2 schematisch dargestellt ist. Das Werkstück 2 ist ein Leichtbauplatten-Werkstück, das in der vorliegenden Ausführungsform zwei dünnwandige Decklagen 4, 6 und eine zwischen den Decklagen angeordnete Kernlage 8 aufweist. Bei der Kernlage 8 handelt es sich in der vorliegenden Ausführungsform um ein Wabenmaterial aus Papier oder Karton mit Hohlräumen, die sich von der einen Decklage 4 zur anderen Decklage 6 erstrecken. Demgegenüber sind die Decklagen 4 und 6 in der vorliegenden Ausführungsform aus einem Spanplattenmaterial hergestellt, sodass die Kernlage 8 eine deutlich geringere mittlere Dichte aufweist als die Decklagen 4 und 6. Es ist jedoch zu beachten, dass die Materialien der Decklagen und der Kernlage im Rahmen der vorliegenden Erfindung nicht besonders beschränkt sind und beispielsweise auch verschiedene kunststoff- oder metallbasierte Materialien zum Einsatz kommen können.

Wie in Fig. 1 zu erkennen ist, kann das Werkstück 2 als großformatige Platte vorgefertigt werden, die beispielsweise Abmessungen von 2m x 6m besitzt. Aus jedem solchen Werkstück 2 können eine oder mehrere Leichtbauplatten 1 mittels des erfindungsgemäßen Verfahrens hergestellt werden, wobei eine bevorzugte Ausführungsform des erfindungsgemäßen Verfahrens nachfolgend beschrieben wird.

Zunächst wird, wie in Fig. 1 und Fig. 2 zu erkennen ist, für jede herzustellende Leichtbauplatte 1 mindestens eine Nut 10 in das Werkstück 2 eingebracht, und zwar beispielsweise mittels eines in Fig. 2 schematisch dargestellten Fräswerkzeugs 14. Der Einsatz eines solchen Fräswerkzeugs ergibt eine Nut 10 mit einem im Wesentlichen u-förmigen Querschnitt. Es ist jedoch zu beachten, dass auch andersartige Fräs-Werkzeuge oder Bearbeitungstechniken zum Einsatz kommen können, die abweichende Nutquerschnitte ergeben.

Die Nut 10 wird dabei derart eingebracht, dass sie sich durch die erste Decklage 4 (die obere Decklage in Fig. 2) sowie vollständig durch die Kernlage 8 erstreckt (vgl. ebenfalls Fig. 2). In manchen Fällen kann es auch sinnvoll sein, die Nut bis in die Decklage 6 hineinzuführen, obgleich dies hier nicht gezeigt ist. Wie in Fig. 1 zu erkennen ist, umschreibt die Nut 10 die Kontur der herzustellenden Leichtbauplatte 1.

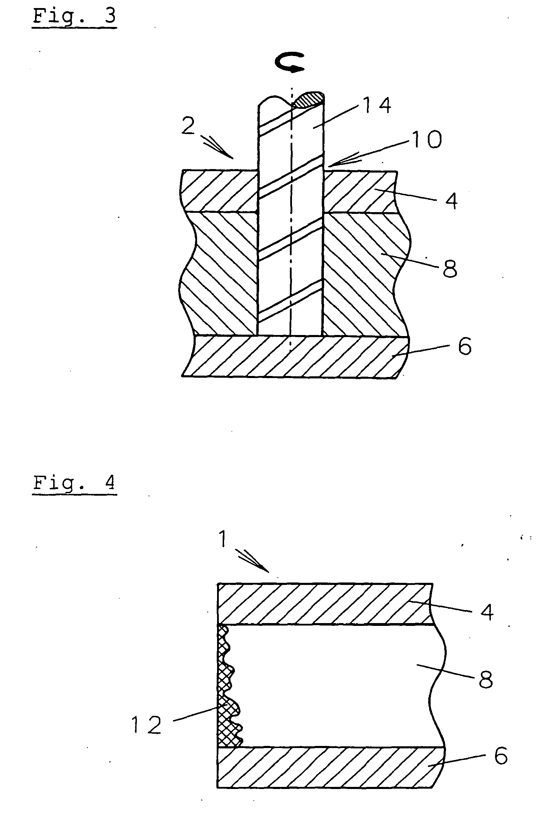

Nach dem Herstellen und gegebenenfalls Reinigen (z.B. Ausblasen) der Nut 10 wird diese mit einer aushärtbaren Masse 12 gefüllt (Fig. 3), beispielsweise einem PUR-Schaum. Als aushärtbare Masse kommen im Rahmen der vorliegenden Erfindung unterschiedlichste Materialien infrage, die vorteilhaft ein gutes Fließvermögen besitzen, sodass die aushärtbare Masse 12 beim Einfüllen in die Nut 10 in die der Nut zugewandten Hohlräume der Kernlage 8 eindringen kann. Dabei wird die Nut 10 in der vorliegenden Ausführungsform vollständig mit der aushärtbaren Masse 12 gefüllt, obgleich je nach Anwendungsfall auch eine teilweise Füllung der Nut ausreichend sein kann. In diesem Falle sollte jedoch meist zumindest die Kernlage 8 vollständig durch die Masse 12 bedeckt sein, um eine gute Abdichtungs- und Stabilisierungswirkung zu erzielen.

Anschließend wird die aushärtbare Masse 12 ausgehärtet, beispielsweise indem für eine vorbestimmte Zeitdauer abgewartet oder ggf. zusätzlich die Aushärtung beschleunigt wird, beispielsweise mittels UV-Strahlung, Wärme, Kälte, etc.

Sobald die Masse 12 einen ausreichenden Aushärtungsgrad erreicht hat, wird die Leichtbauplatte 1 durch Führen eines Trennschnitts entlang der Nut 10 aus dem Werkstück 2 herausgetrennt, beispielsweise mittels einer Säge. Dabei kann der Trennschnitt beispielsweise so geführt werden, dass man direkt die in Fig. 4 in einem Schnitt dargestellte Schmalflächenkonfiguration der Leichtbauplatte 1 erhält. Dies bedeutet, dass der Trennschnitt am Rand der Nut 10 geführt wird, und zwar entweder vollständig oder zumindest teilweise innerhalb der Nut.

Diese in Fig. 4 gezeigte Schmalfläche kann anschließend weiteren Veredelungsschritten unterworfen werden, wie beispielsweise einem Planschleifen, anschließendem Grundieren, danach Bedrucken oder gegebenenfalls Aufbringen einer Dekorkante, obgleich all diese Schritte selbstverständlich optional sind.

Obgleich in den Figuren nicht gezeigt, ist es mittels des erfindungsgemäßen Verfahrens ebenso möglich, aus einem Werkstück 2 mehrere Leichtbauplatten 1 zu gewinnen. Dabei können für jede Leichtbauplatte 1 separate Nuten 10 erstellt werden. Im Rahmen der Erfindung ist es jedoch bevorzugt, dass die Nuten 10 benachbarter Werkstücke 1 nach Möglichkeit zusammengeführt werden, was nicht nur den Verschnitt, sondern auch den Arbeitsaufwand minimiert.

Ferner kann, obgleich in den Figuren nicht gezeigt, mittels des erfindungsgemäßen Verfahrens vorteilhaft auch ein Ausschnitt innerhalb der jeweiligen Leichtbauplatte 1 erstellt werden, beispielsweise zum Einsetzen einer Spüle oder Herdplatte. In diesem Falle wird die jeweilige Nut 10 nicht an einer Außenkontur, sondern an einer Innenkontur der Leichtbauplatte 1.

## Patentansprüche

1. Verfahren zum Herstellen von Leichtbauplatten (1), bei welchem
ein Werkstück (2) bereitgestellt wird, das zwei dünnwandige Decklagen (4, 6) und mindestens eine zwischen den Decklagen (4, 6) angeordnete Kernlage (8) aus leichtem Füllmaterial aufweist, wobei die mindestens eine Kernlage (8) Hohlräume besitzt und eine geringere mittlere Dichte aufweist als die Decklagen,
**dadurch gekennzeichnet, dass** das Verfahren ferner folgende Schritte aufweist:
Einbringen mindestens einer Nut (10) in das Werkstück (2), die sich durch mindestens eine erste Decklage (4) sowie zumindest teilweise durch die mindestens eine Kernlage (8) erstreckt und zumindest einen Abschnitt einer Kontur der herzustellenden Leichtbauplatte (1) umschreibt,
Einbringen einer aushärtbaren Masse (12) in die mindestens eine Nut (10),
zumindest teilweises Aushärten der aushärtbaren Masse (12), und
Führen eines Trennschnitts entlang der mindestens einen Nut (10), so dass die zumindest teilweise ausgehärtete Masse (12) in Nutlängsrichtung durchtrennt wird.

2. Verfahren nach Anspruch 1, **dadurch gekennzeichnet, dass** die mindestens eine Nut (10) vollständig durch die mindestens eine Kernlage (8) hindurchreicht.

3. Verfahren nach Anspruch 2, **dadurch gekennzeichnet, dass** die mindestens eine Nut (10) zumindest teilweise in die zweite Decklage (6) hineinreicht.

4. Verfahren nach einem der vorhergehenden Ansprüche, **dadurch gekennzeichnet, dass** die mindestens eine Nut (10) im Querschnitt im wesentlichen u-förmig ist.

5. Verfahren nach einem der vorhergehenden Ansprüche, **dadurch gekennzeichnet, dass** die mindestens eine Nut (10) innerhalb des Werkstücks (2) an mindestens zwei herzustellende Leichtbauplatten (1) angrenzt.

6. Verfahren nach einem der vorhergehenden Ansprüche, **dadurch gekennzeichnet, dass** die aushärtbare Masse (12) derart in die mindestens eine Nut (10) eingebracht wird, dass zumindest die angrenzende Kernlage (8) vollständig durch die Masse (12) bedeckt ist.

7. Verfahren nach einem der vorhergehenden Ansprüche, **dadurch gekennzeichnet, dass** der Trennschnitt am Rand der Nut (10) vollständig oder teilweise innerhalb der Nut (10) geführt wird.

8. Verfahren nach einem der vorhergehenden Ansprüche, **dadurch gekennzeichnet, dass** die Oberfläche der zumindest teilweise ausgehärteten Masse nach dem Führen des Trennschnitts mindestens einem weiteren Verfahrensschritt unterworfen wird, der ausgewählt ist aus Bearbeiten, insbesondere spanendes Bearbeiten, Bemustern, Beschichten und Aufbringen einer Dekorkante.

## Claims

1. Process for producing lightweight building panels (1), in which a workpiece (2) is provided which has two thin-walled cover layers (4, 6) and at least one core layer (8) made from light filling material arranged between the cover layers (4, 6), wherein the at least one core layer (8) has cavities and has a lower average density than the cover layers, **characterised in that** the process also has the following steps:
introduction of at least one groove (10) into the workpiece (2), which extends through at least one first cover layer (4) and at least partly through the at least one core layer (8) and outlines at least one section of a contour of the lightweight building panel (1) to be produced,
introduction of a curable composition (12) into the at least one groove (10),
at least partial curing of the curable composition (12), and
making a separating cut along the at least one groove (10), so that the at least partly cured composition (12) is cut in the longitudinal direction of the groove.

2. Process according to claim 1, **characterised in that** the at least one groove (10) stretches right through the at least one core layer (8).

3. Process according to claim 2, **characterised in that** the at least one groove (10) stretches at least partly into the second cover layer (6).

4. Process according to one of the preceding claims, **characterised in that** the at least one groove (10) is essentially U-shaped in cross-section.

5. Process according to one of the preceding claims, **characterised in that** the at least one groove (10) within the workpiece (2) adjoins at least two lightweight building panels (1) to be produced.

6. Process according to one of the preceding claims, **characterised in that** the curable composition (12) is introduced into the at least one groove (10), such that at least the adjoining core layer (8) is covered completely by the composition (12).

7. Process according to one of the preceding claims, **characterised in that** the separating cut at the edge of the groove (10) is made completely or partly within the groove (10).

8. Process according to one of the preceding claims, **characterised in that** the surface of the at least partly cured composition, after making the separating cut, is subjected to at least one further process step which is selected from machining, in particular material-cutting machining, sampling, coating and application of a decorative edge.

## Revendications

1. Procédé de fabrication de panneaux de construction légère (1), selon lequel :
- une pièce (2) est mise à disposition qui comporte deux couches de recouvrement (4, 6) à paroi mince et au moins une couche centrale (8) agencée entre les couches de recouvrement (4, 6) et d'un matériau de remplissage léger, la au moins une couche centrale (8) possédant des cavités et une densité moyenne inférieure à celle des couches de recouvrement,
**caractérisé en ce que** le procédé comporte en outre les étapes suivantes consistant à :
- pratiquer dans la pièce (2) au moins une rainure (10) qui s'étend à travers au moins une première couche de recouvrement (4) ainsi qu'au moins partiellement à travers la au moins une couche centrale (8) et qui circonscrit au moins un tronçon d'un contour du panneau de construction légère (1) à fabriquer,
- introduire une matière pouvant être durcie (12) dans la au moins une rainure (10),
- durcir au moins partiellement la matière pouvant être durcie (12), et
- guider une coupe de réparation le long de la au moins une rainure (10) de telle sorte que la matière au moins partiellement durcie (12) est coupée dans la direction de longueur de la rainure.

2. Procédé selon la revendication 1, **caractérisé en ce que** la au moins une rainure (10) traverse complètement la au moins une couche centrale (8).

3. Procédé selon la revendication 2, **caractérisé en ce que** la au moins une rainure (10) pénètre au moins partiellement dans la seconde couche de recouvrement (6).

4. Procédé selon l'une quelconque des revendications précédentes, **caractérisé en ce que** la au moins une rainure (10) est sensiblement en forme de U en coupe transversale.

5. Procédé selon l'une quelconque des revendications précédentes, **caractérisé en ce que** la au moins une rainure (10) à l'intérieur de la pièce (2) est adjacente à au moins deux plateaux de construction légère (1) à fabriquer.

6. Procédé selon l'une quelconque des revendications précédentes, **caractérisé en ce que** la matière pouvant être durcie (12) est introduite dans la au moins une rainure (10) de telle sorte qu'au moins la couche centrale adjacente (8) est complètement recouverte par la matière (12).

7. Procédé selon l'une quelconque des revendications précédentes, **caractérisé en ce que** la coupe de réparation au bord de la rainure (10) est guidée complètement ou partiellement à l'intérieur de la rainure (10).

8. Procédé selon l'une quelconque des revendications précédentes, **caractérisé en ce que** la surface de la matière au moins partiellement durcie après le guidage de la coupe de réparation est soumise à au moins une autre étape de procédé qui est choisie parmi un usinage, notamment un usinage par enlèvement de copeaux, une décoration, une enduction et une application d'une arête décorative.
